# EUROPEAN PATENT SPECIFICATION

(11) **EP 3 623 262 B1**
(45) Date of publication and mention of the grant of the patent: **30.08.2023**
(21) Application number: 19197621.6
(22) Date of filing: 16.09.2019
(51) Int. Cl.: B62D 21/20, B62D 53/06

(54) **SEMI-TRAILER**
SATTELAUFLIEGER
SEMI-REMORQUE

(30) Priority: 14.09.2018 GB 201814972
(43) Date of publication of application: 18.03.2020
(73) Proprietor: Dennison Trailers Unlimited Company, Naas, Co. Kildare (IE)
(72) Inventor: DENNISON, David, Sallins, County Kildare (IE)
(74) Representative: Schütte, Gearoid

(56) References cited:
- EP-A1- 1 992 523
- DE-B- 1 192 933
- DE-U1- 9 306 626
- DE-U1-202015 102 447
- GB-A- 2 542 160
- JP-A- 2013 103 623

## Description

### Introduction

This invention relates to semi-trailers, and in particular to semi-trailers used for the road transport of container boxes.

The invention particularly relates to telescopically length adjustable sliding bogie trailers or sliding skeletal trailers used for the transport of container boxes. Examples of this type of trailer are described in GB 2 335 891, DE-U1-9306626 and EP 3 141 422. A dump trailer is disclosed in DE1192933 having an outer frame with an associated bottomless inner frame slidably mounted on the outer frame so that when it is pushed back by rams, it discharges the load carried on the trailer within the outer frame through the open bottom of the inner frame. A telescopically adjustable trailer is disclosed in CN 201120903.

### Summary of the invention

According to the invention there is provided a semi-trailer, including:
a trailer chassis mounted on wheels and having a kingpin for attachment to a tractor vehicle for towing the trailer chassis;
the trailer chassis comprising a telescopically extendable trailer chassis comprising two slidably interconnected trailer parts, namely a front trailer part and a rear trailer part;
at least two longitudinally spaced-apart bolster assemblies on the trailer chassis for mounting a container box on the trailer chassis for transport;
wherein an extension frame is slidably mounted on the rear trailer part, at a rear end of the rear trailer part, for movement between a retracted stored position on the rear trailer part and an extended position on the rear trailer part increasing the length of the semi-trailer;
a bolster assembly mounted on the extension frame for cooperation with one of the bolster assemblies on the trailer chassis for mounting a container box on the trailer chassis;
the extension frame slidably engaging the trailer chassis by means of a pair of longitudinally spaced-apart roller assemblies engaged between the rear trailer part and the extension frame;
the roller assemblies comprising an upper roller assembly engaged between a top of the extension frame and the rear trailer part and a lower roller assembly engaged between a bottom of the extension frame and the rear trailer part.

In one embodiment of the invention the upper roller assembly is mounted inboard of the lower roller assembly.

In another embodiment of the invention both roller assemblies are mounted on the rear trailer part.

In another embodiment of the invention the upper roller assembly engages an upper face of the extension frame and the lower roller assembly engages a lower face of the extension frame.

In another embodiment of the invention locking means is provided for releasably locking the extension frame in the stored position, or in the extended position.

In another embodiment of the invention the locking means comprises complementary interengagable male and female formations on the rear trailer part and on the extension frame.

In another embodiment of the invention the male formations comprise a pair of spaced-apart locking bosses on the rear trailer part and the female formations comprise two longitudinally spaced-apart pairs of receivers on the extension frame.

In another embodiment of the invention the locking means comprises a pair of ram operated locking bolts mounted in parallel on the rear trailer part for movement between a retracted released position and an extended engaged position for engagement with complementary upright receivers on the extension frame. Conveniently the locking bolts are mounted in a horizontal orientation at a rear end of the chassis.

In another embodiment of the invention the bolster assembly on the extension frame comprises a pair of spaced-apart adjustable bolsters mounted on the extension frame, each adjustable bolster being movable between a raised in-use position on the extension frame and a lowered stored position on the extension frame.

In another embodiment of the invention each adjustable bolster is pivotally mounted on the extension frame for movement between the raised positon and the lowered position on the extension frame.

In another embodiment of the invention the adjustable bolsters are mounted on a cross-beam at an outer end of the extension frame and the cross-beam is nestably engagable within a complementary receiver slot on the trailer chassis when the extension frame is in the retracted stored position on the trailer chassis.

In another embodiment of the invention the bolster assembly on the trailer chassis for cooperation with the bolster assembly on the extension frame comprises a pair of folding bolsters pivotally mounted on the trailer chassis for movement between a lowered stored position on the trailer chassis and a raised operative position on the trailer chassis.

In another embodiment of the invention the trailer chassis has a pair of spaced-apart parallel longitudinal beams and each folding bolster is located at or below a top surface of the longitudinal beams and between the longitudinal beams in the stored position and the folding bolster extends laterally outwardly of a longitudinal beam when in the operative position.

In another embodiment of the invention the extension frame is slidably movable on the chassis between the retracted stored position on the chassis, a partially extended positon on the chassis and a fully extended position on the chassis. The rearmost twistlock on the extension frame is located such that a rear end of a forty foot container box is positioned 12 metres from a kingpin on the chassis when the extension frame is in the partially extended position and a rear end of a forty-five foot container box is positioned 12.15 metres from the kingpin when the extension frame in the fully extended position. Conveniently a front end of the trailer chassis is telescopically extendable to position a twistlock assembly thereon for cooperation with the rearmost twist lock assembly on the extension frame when the extension frame is in the fully extended position for mounting a forty-five foot container on the semi-trailer.

### Brief Description of the Drawings

The invention will be more clearly understood by the following description of some embodiments thereof, given by way of example only, with reference to the accompanying drawings, in which:
Fig. 1 is an elevational view of a semi-trailer according to the invention, shown in a fully collapsed position;
Fig. 2 is an elevational view of the semi-trailer, shown in a fully extended positon;
Fig. 3 is a detail exploded perspective view showing a rear trailer part and an associated extension frame forming portion of the semi-trailer;
Fig. 4 is a detail plan view of the rear trailer part;
Fig. 5 is a sectional elevational view taken along the line V-V of Fig. 4;
Fig. 6 is a detail perspective view showing a rear end of the rear trailer part;
Fig. 7 is an enlarged detail sectional elevational view showing a rear end of the rear trailer part;
Fig. 8 is a detail sectional elevational view taken along the line VIII-VIII of Fig. 7;
Fig. 9 is a detail sectional elevational view taken along the line IX-IX of Fig. 7;
Fig. 10 is a plan view of the extension frame;
Fig. 11 is a sectional elevational view of the extension frame taken along the line XI-XI of Fig. 10;
Fig. 12 is a rear elevational view of the extension frame;
Fig. 13 is a detail sectional elevational view taken along the line XIII-XIII of Fig. 12;
Fig. 14 is a detail plan view of portion of a front trailer part of the semi-trailer;
Fig. 15 is a sectional elevational view taken along the line XV-XV of Fig. 14;
Fig. 16 is an elevational view of a semi-trailer according to a second embodiment of the invention, shown in a partially extended position for carrying a forty foot container box;
Fig. 17 is an elevational view of the semi-trailer of Fig. 16, shown in a fully extended positon for carrying a forty-five foot container box;
Fig. 18 is a detail perspective view showing a rear end of the semi-trailer shown in Fig. 16; and
Fig. 19 is a plan view of the rear end portion of the semi-trailer shown in Fig. 18.

### Detailed Description of the Preferred Embodiments

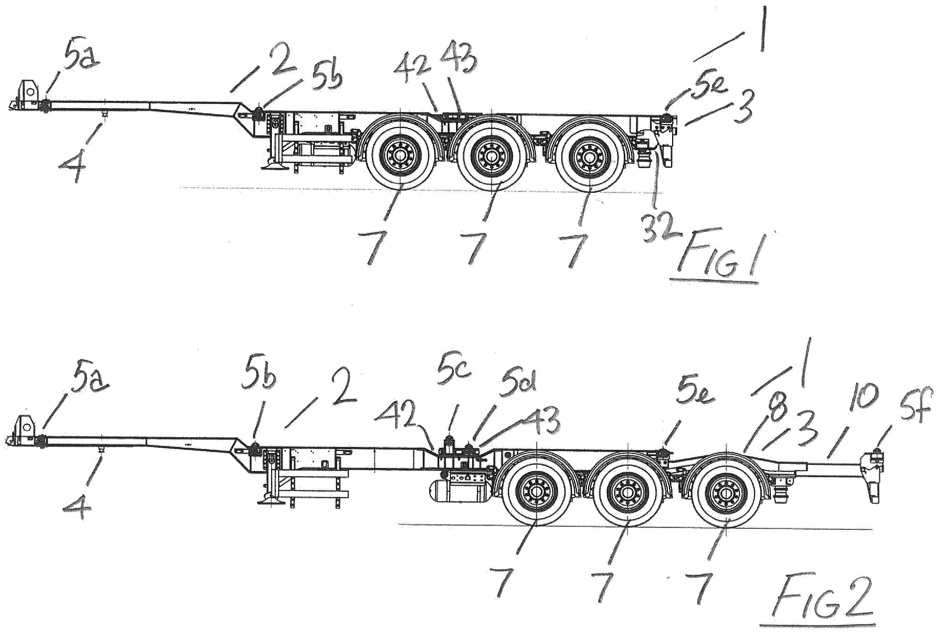

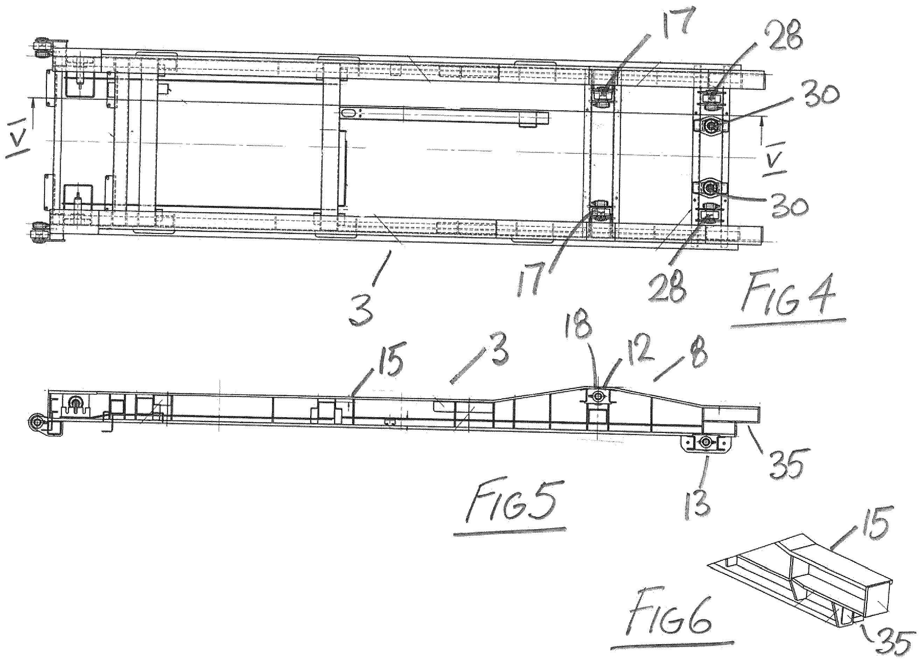

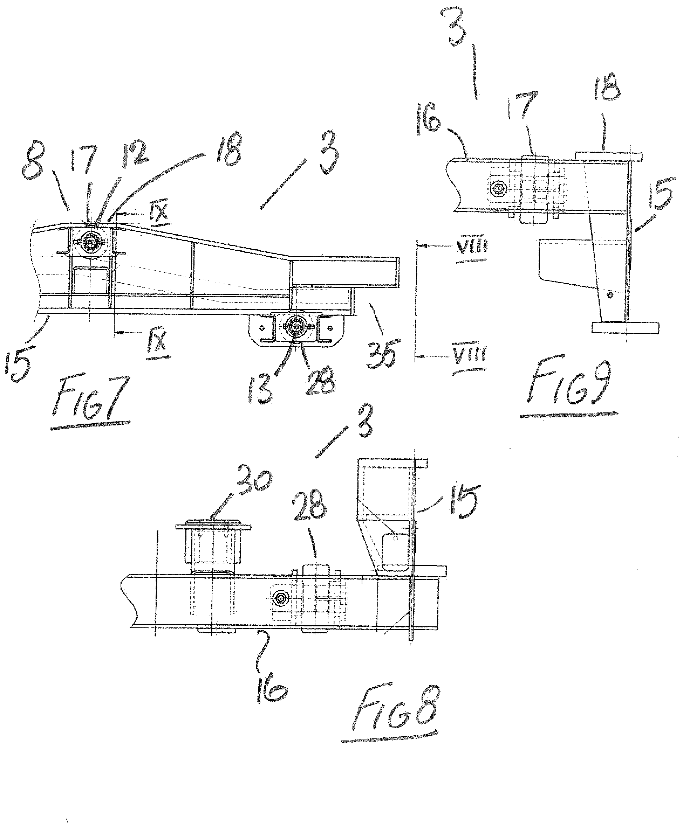

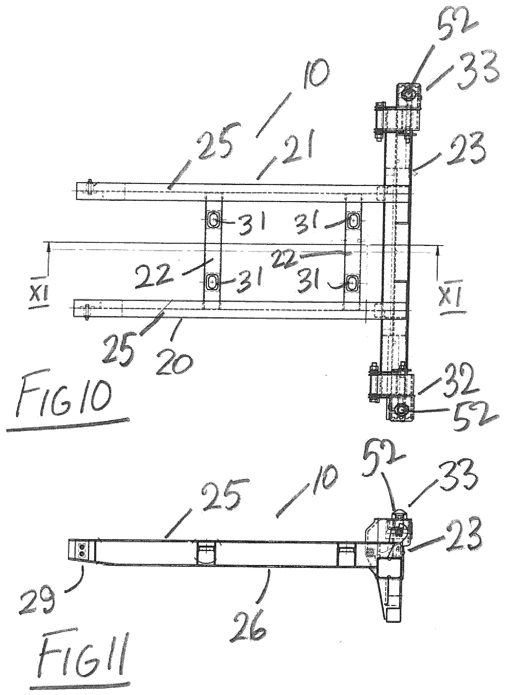

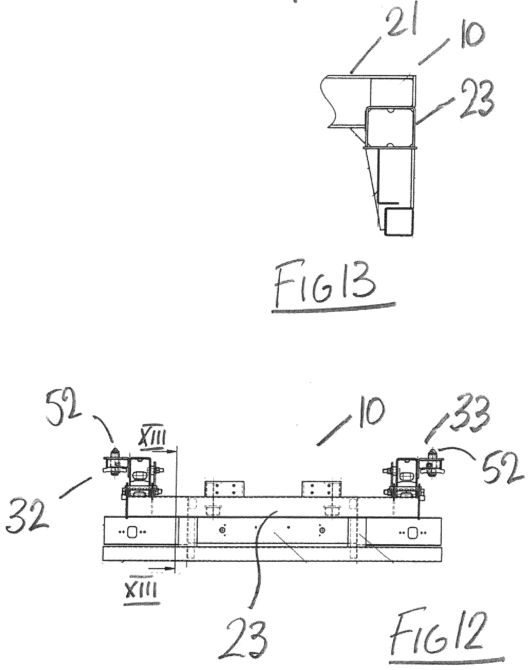

Referring to the drawings, and initially to Figs. 1 to 15 thereof, there is illustrated a semi-trailer according to the invention indicated generally by the reference numeral 1. The semi-trailer 1 is largely similar to the sliding bogie trailer described in our previous patent specification EP 3141422, and essentially comprises a trailer chassis comprising a front trailer part 2 and a complementary rear trailer part 3 which are slidably interconnected for telescopic movement between a collapsed position as shown in Fig. 1 and an extended position as shown in Fig. 2. The front trailer part 2 has a kingpin 4 for attachment to a tractor vehicle for towing the semi-trailer 1. A number of bolster assemblies 5a-5f are longitudinally spaced-apart on the semi-trailer 1 for mounting container boxes of various size on the semi-trailer 1 between associated pairs of bolster assemblies 5a-5f. The rear trailer part 3 is mounted on wheels 7 and has an elevator 8 for sliding the rearmost wheels 7 under the bolster assembly 5e at a rear end of the front trailer part 2 when moving the semi-trailer 1 between the collapsed position shown in Fig. 1 and the extended position shown in Fig. 2. This arrangement is described more fully in EP 3141422 and for the sake of brevity need not be repeated here.

In accordance with the present invention an extension frame 10 is slidably mounted on the rear trailer part 3 at a rear end of the rear trailer part 3 for movement between a retracted stored position on the rear trailer part 3 as shown in Fig. 1 and an extended position on the rear trailer part 3 as shown in Fig. 2 for increasing the length of the semi-trailer 1 in order to carry either two twenty foot containers or a forty foot container on the semi-trailer 1.

The extension frame 10 slidably engages the rear trailer part 3 by means of a pair of longitudinally spaced-apart roller assemblies 12, 13 engaged between the rear trailer part 3 and the extension frame 10. The roller assemblies 12, 13 comprise an upper roller assembly 12 engaged between a top of the extension frame 10 and the rear trailer part 3 and a lower roller assembly 13 engaged between a bottom of the extension frame 10 and the rear trailer part 3.

It will be noted that the upper roller assembly 12 is mounted inboard of the lower roller assembly 13, in this case that is forwardly of the lower roller assembly 13 on the rear trailer part 3.

The rear trailer part 3 comprises a pair of spaced-apart substantially parallel longitudinal I-beams 14, 15 interconnected by cross members 16 extending therebetween. The upper roller assembly 12 comprises a pair of rollers 17 rotatably mounted on a cross member 16 extending between ramps 18 of the elevator 8. The lower roller assembly 13 comprises a pair of rollers 28 mounted on the rearmost cross member 16 on the rear trailer part 3.

The extension frame 10 comprises a pair of spaced-apart substantially parallel longitudinal I-beams 20, 21 interconnected by cross members 22 and a rear cross-beam 23. It will be noted that the spacing of the longitudinal beams 20, 21 of the extension frame 10 is narrower than the spacing of the longitudinal beams 14, 15 of the rear trailer part 3 so that they will fit between the longitudinal beams 14, 15 of the rear trailer part 3. Each longitudinal beam 20, 21 of the extension frame 10 has an upper face 25 and a lower face 26. Thus, the extension frame 10 slides on the rear trailer part 3 with the flat upper faces 25 of the longitudinal beams 20, 21 engaging the rollers 17 of the upper roller assembly 12 and the lower flat faces 26 of the I-beams 20, 21 engaging the rollers 28 of the lower roller assembly 13. It will be noted that the bottom face 26 of each longitudinal beam 20, 21 of the extension frame 10 is tapered upwardly at a leading or front end 29.

Locking means is provided for releasably locking the extension frame 10 on the rear trailer part 3 in either the stored position, or the extended position. In this case the locking means comprises a pair of upstanding locking bosses 30 on the rearmost cross member 16 of the rear trailer part 3 which are releasably engagable with complementary pairs of female receiver slots 31 on cross members 22 of the extension frame 10. Pneumatic rams raise and lower the locking bosses 30 for engagement/disengagement with the receiver slots 31. In an alternative arrangement the bosses 30 could be manually operated.

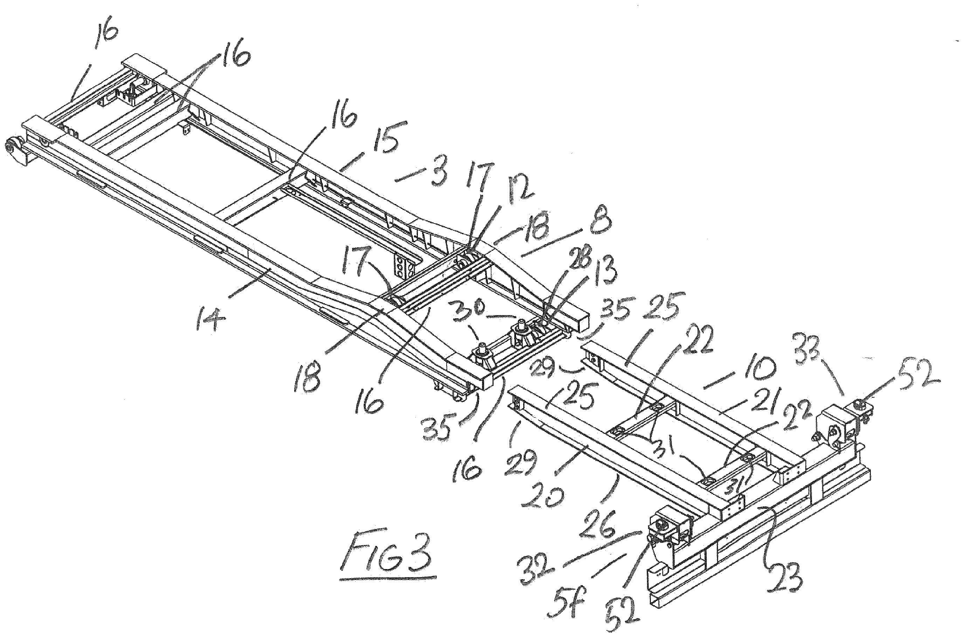

The rear cross-beam 23 on the extension frame 10 projects laterally outwardly of the longitudinal beams 20, 21. The rearmost bolster assembly 5f comprises a pair of swinging bolsters 32, 33 which are pivotally movable on the rear cross-beam 23 between a raised in-use position as shown in Fig. 3 and a lowered stored position as shown in Fig. 1 in which each bolster 32, 33 is folded forwardly of the cross-beam 23.

It will be noted that the rear cross-beam 23 is nestably engagable within a complementary receiver slot 35 at a rear end of the each longitudinal beam 14, 15 of the rear trailer part 3.

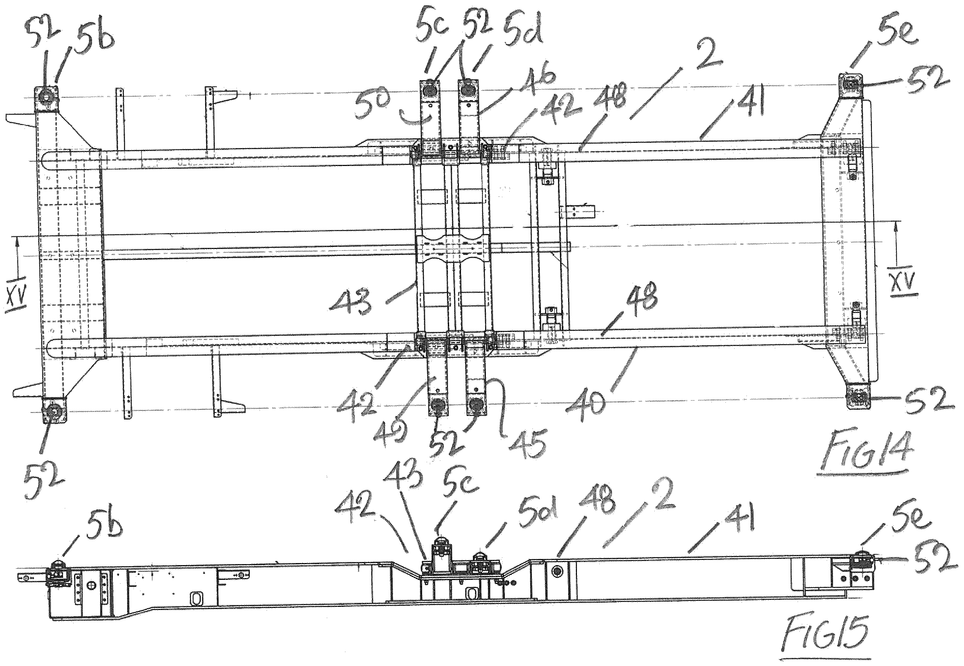

Referring in particular to Fig. 14 and Fig. 15, the front trailer part 2 comprises a pair of spaced-apart substantially parallel longitudinal I-beams 40, 41. Intermediate the ends of the longitudinal beams 40, 41 a well 42 is formed for reception of a bolster frame 43, spanning between the longitudinal beams 40, 41 and perpendicular thereto, and carrying the bolster assemblies 5c and 5d.

The rearmost bolster assembly 5d cooperates with the bolster assembly 5f on the extension frame 10 to mount a twenty foot container box on the semi-trailer 1. The bolster assembly 5d comprises a pair of folding bolsters 45, 46 pivotally mounted on the bolster frame 43 for movement between a lowered stored position on the front trailer part 2 as shown in Fig. 1 and a raised operative position on the front trailer part 2 as shown in Fig. 2, Fig. 14 and Fig. 15. In the folded position each bolster 45, 46 is located below a top surface 48 of the longitudinal beams 40, 41 and between the longitudinal beams 40, 41. In the operative position the bolsters 45, 46 extend laterally outwardly of the longitudinal beams 40, 41 as best seen in Fig. 14.

The bolster assembly 5c has swinging bolsters 49, 50 pivotally mounted on the bolster frame 43 for movement between a folded position between the longitudinal beams 40, 41 and below the top surface 48 thereof and an in-use operative position extending laterally outwardly of the longitudinal beams 40, 41 as shown in Fig.14 in an elevated position above the top surface 48 of the longitudinal beams 40, 41 for cooperation with the front bolster assembly 5a to carry a twenty foot container box on the front trailer part 2.

Each bolster assembly 5a-5f has conventional twistlocks 52 for releasable engagement with container boxes to secure the container boxes on the semi-trailer 1 in the usual way.

In use, the semi-trailer can be telescopically adjusted to carry different container boxes. In the fully collapsed position shown in Fig. 1 a twenty foot container box can be carried between the bolster assemblies 5b and 5e. In the extended position shown in Fig. 2 two twenty foot container boxes can be mounted in tandem between the bolster assemblies 5a and 5c and 5d and 5f, or a forty foot container box could be mounted between the bolster assemblies 5a and 5f, or a single twenty foot container box could be mounted between the bolster assemblies 5b and 5e. A thirty foot container box could be mounted between the bolster assemblies 5b and 5f. It will be appreciated that a wide range of container boxes of different sizes can be carried on the semi-trailer 1.

While the embodiment described herewith shows the extension frame 10 incorporated into a specific type of sliding bogie trailer, it will be appreciated that the extension frame 10 assembly could be incorporated in other trailers in a similar way.

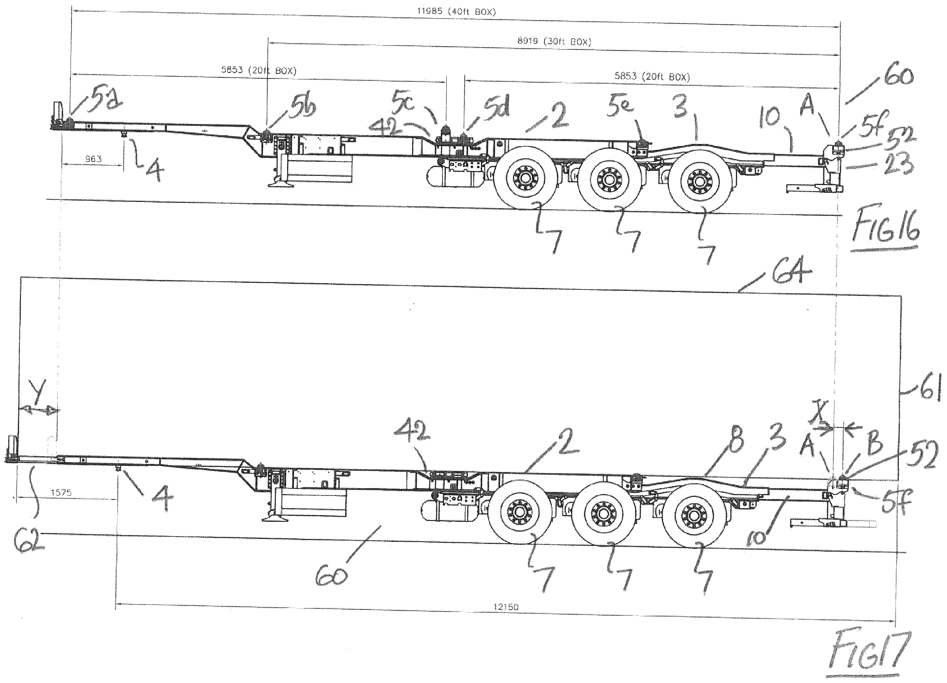

Referring now to Figs. 16 to 19, there is shown another semi-trailer according to a second embodiment of the invention indicated generally by the reference numeral 60. Parts similar to those described previously are assigned the same reference numerals. In this case the extension frame 10 is slidably movable on the rear trailer part 3 of the chassis between the retracted stored position on the chassis, a partially extended position on the chassis as shown in Fig. 16 and a fully extended position on the chassis as shown in Fig. 17.

In the partially extended position the rearmost twistlock 52 on the extension frame 10 is located at position A for supporting a rear end of a forty foot container box twelve metres from the kingpin 4 at a front end of the chassis to facilitate carriage of a forty foot container box, or two twenty foot container boxes on the chassis as previously described.

In the fully extended position on the chassis the rearmost twistlock 52 is located at a position B such that a rear end 61 of a forty-five foot container box 64 is positioned at 12.15 metres from the kingpin 4 to facilitate carriage of a forty-five foot container box 64 on the chassis.

A front end 62 of the trailer chassis is telescopically extendable to position a twistlock assembly of the front bolster 5a for cooperation with the rearmost twistlαck assembly 52 on the extension frame 10 when the extension frame 10 is in the fully extended position for mounting the forty-five foot container on the semi-trailer 60. The distance X between position A and position B is fifteen centimetres. The front end 62 extends forward by distance Y, being 612 millimetres.

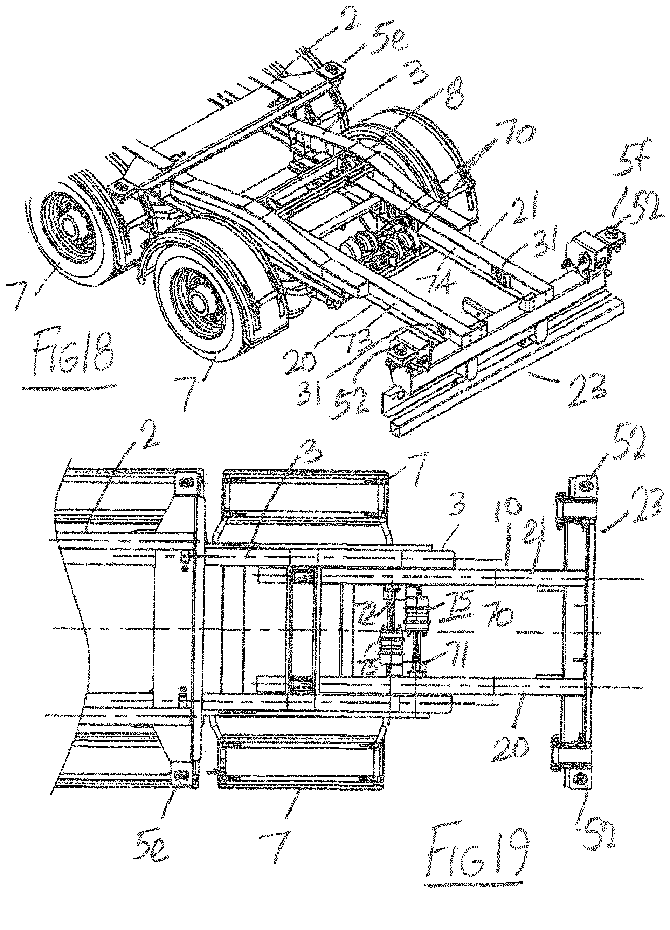

Referring in particular to Fig. 18 and Fig. 19, an alternative locking arrangement 70 is provided for locking the extension frame 10 on the rear trailer part 3 of the chassis. In this case the locking arrangement 70 comprises a pair of ram operated locking bolts 71, 72 mounted transversely and horizontally in parallel at a rear end of the rear trailer part 3 for movement between a retracted release position and an extended engaged position for engagement with complementary upright receivers 31 on vertical webs 73, 74 of the I-beams 20, 21. The rearmost receivers 31 are associated with the fully collapsed stored position of the extension frame 10 on the rear trailer part 3. Forward pairs of receivers 31 on each web 73, 74 are associated with positions A and B for locking the extension frame 10 in the partially extended position and the fully extended position on the rear trailer part 3 of the chassis. The locking bolts 71, 72 and their associated operating rams 75 are mounted side-by-side transversely one in front of the other on the rear trailer part 3 facing in opposite directions for engagement with receivers 31 on the I-beams 20, 21.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A semi-trailer (1), including:
a trailer chassis (2,3) mounted on wheels (7) and having a kingpin (4) for attachment to a tractor vehicle for towing the trailer chassis;
the trailer chassis (2, 3) comprising a telescopically extendable trailer chassis (2, 3) comprising two slidably interconnected trailer parts (2, 3), namely a front trailer part (2) and rear trailer part (3);
at least two longitudinally spaced-apart bolster assemblies (5) on the trailer chassis (2, 3) for mounting a container box on the trailer chassis (2, 3) for transport;
**characterised in that** an extension frame (10) is slidably mounted on the rear trailer part (3), at a rear end of the rear trailer part (3), for movement between a retracted stored position on the rear trailer part (3) and an extended position on the rear trailer part (3) increasing the length of the semi-trailer;
a bolster assembly (5f) mounted on the extension frame (10) for cooperation with one of the bolster assemblies (5) on the trailer chassis (2,3) for mounting a container box on the trailer chassis (2,3);
the extension frame (10) slidably engaging the trailer chassis (3) by means of a pair of longitudinally spaced-apart roller assemblies (12, 13) engaged between the rear trailer part (3) and the extension frame (10);
the roller assemblies (12,13) comprising an upper roller assembly (12) engaged between a top of the extension frame (10) and the rear trailer part (3) and a lower roller assembly (13) engaged between a bottom of the extension frame (10) and the rear trailer part (3).

2. The semi-trailer (1) as claimed in claim 1 wherein the upper roller assembly (12) is mounted inboard of the lower roller assembly (13).

3. The semi-trailer (1) as claimed in claim 1 or claim 2 wherein both roller assemblies (12, 13) are mounted on the rear trailer part (3).

4. The semi-trailer (1) as claimed in any preceding claim, wherein the upper roller assembly (12) engages an upper face (25) of the extension frame (10) and the lower roller assembly (13) engages a lower face (26) of the extension frame (10).

5. The semi-trailer (1) as claimed in any one of the preceding claims wherein locking means (30, 31) is provided for releasably locking the extension frame (10) in the stored position, or in the extended position.

6. The semi-trailer (1) as claimed in claim 5 wherein the locking means comprises complementary interengagable male (30) and female (31) formations on the rear trailer part (3) and on the extension frame (10).

7. The semi-trailer (1) as claimed in claim 6 wherein the male formations comprise a pair of spaced-apart locking bosses (30) on the rear trailer part (3) the female formations comprise two longitudinally spaced-apart pairs of receivers (31) on the extension frame (10).

8. The semi-trailer (1) as claimed in claim 6 wherein the locking means comprises a pair of ram operated locking bolts (71, 72) mounted in parallel on the rear trailer part (3) for movement between a retracted released position and an extended engaged position for engagement with complementary upright receivers (31) on the extension frame (10).

9. The semi-trailer (1) as claimed in any one of the preceding claims wherein the bolster assembly (5f) on the extension frame (10) comprises a pair of spaced-apart adjustable bolsters (32, 33) mounted on the extension frame (10), each adjustable bolster (32, 33) being movable between a raised in-use position on the extension frame (10) and a lowered stored position on the extension frame (10).

10. The semi-trailer (1) as claimed in claim 9 wherein the adjustable bolsters (32, 33) are mounted on a cross-beam (23) at an outer end of the extension frame (10) and the cross-beam (23) is nestably engagable within a complementary receiver slot (35) on the trailer chassis (3) when the extension frame (10) is in the retracted stored position on the trailer chassis (3).

11. The semi-trailer (1) as claimed in any one of the preceding claims wherein the bolster assembly (5d) on the trailer chassis (2) for cooperation with the bolster assembly (5f) on the extension frame (10) comprises a pair of folding bolsters (45, 46) pivotally mounted on the trailer chassis (2) for movement between a lowered stored position on the trailer chassis (2) and a raised operative position on the trailer chassis (2) .

12. The semi-trailer (1) as claimed in claim 11 wherein the trailer chassis (2) has a pair of spaced-apart parallel longitudinal beams (40, 41) and each folding bolster (45, 46) is located at or below a top surface (48) of the longitudinal beams (40, 41) and between the longitudinal beams (40, 41) in the stored position and the folding bolster (45, 46) extends laterally outwardly of a longitudinal beam (40, 41) when in the operative position.

13. The semi-trailer (60) as claimed in any one of the preceding claims wherein the extension frame (10) is slidably movable on the rear trailer part (3) between the retracted stored position on the rear traler part (3), a partially extended positon (A) on the rear trailer part (3) and a fully extended position (B) on the rear trailer part (3).

14. The semi-trailer (60) as claimed in claim 13 wherein a front end (62) of the trailer chassis is telescopically extendable to position a twistlock assembly thereon for cooperation with a rearmost twistlock assembly (52) on the extension frame (10) when the extension frame (10) is in the fully extended position for mounting a forty-five foot container on the semi-trailer (60).

## Patentansprüche

1. Sattelanhänger (1), einschließend:
ein auf Rädern (7) montiertes Anhängechassis (2, 3), das einen Königszapfen (4) zur Befestigung an einem Zugfahrzeug zum Ziehen des Anhängechassis aufweist;
das Anhängerchassis (2, 3) ein teleskopisch ausfahrbares Anhängerchassis (2, 3) umfasst, das zwei verschiebbar miteinander verbundene Anhängerteile (2, 3) umfasst, nämlich ein vorderes Anhängerteil (2) und ein hinteres Anhängerteil (3);
mindestens zwei in Längsrichtung voneinander beabstandete Polsterbaugruppen (5) auf dem Anhängerchassis (2, 3) zur Montage einer Behälterbox auf dem Anhängerchassis (2, 3) für den Transport;
**dadurch gekennzeichnet, dass** ein Verlängerungsrahmen (10) an einem hinteren Anhängerteil (3) verschiebbar montiert ist, um zwischen einer zurückgezogenen Lagerposition auf dem hinteren Anhängerteil (3) und einer ausgefahrenen Position auf dem hinteren Anhängerteil (3) bewegt werden zu können, wodurch die Länge des Sattelanhängers vergrößert wird;
eine Polsterbaugruppe (5f), die auf dem Verlängerungsrahmen (10) montiert ist, um mit einer der Polsterbaugruppen (5) auf dem Anhängerchassis (2, 3) zusammenzuarbeiten und eine Behälterbox auf dem Anhängerchassis (2, 3) zu montieren;
der Verlängerungsrahmen (10) gleitend in das Anhängerchassis (3) eingreift, und zwar mittels eines Paares von in Längsrichtung beabstandeten Rollenbaugruppen (12, 13), die zwischen dem hinteren Anhängerteil (3) und dem Verlängerungsrahmen (10) eingreifen;
die Rollenbaugruppen (12, 13) eine obere Rollenbaugruppe (12) umfassen, die zwischen einem oberen Teil des Verlängerungsrahmens (10) und dem hinteren Anhängerteil (3) eingreift, und eine untere Rollenbaugruppe (13), die zwischen einem unteren Teil des Verlängerungsrahmens (10) und dem hinteren Anhängerteil (3) eingreift.

2. Sattelanhänger (1) nach Anspruch 1, wobei die obere Rollenbaugruppe (12) innenliegend an der unteren Rollenbaugruppe (13) montiert ist.

3. Sattelanhänger (1) nach Anspruch 1 oder 2, wobei beide Rollenbaugruppen (12, 13) an dem hinteren Anhängerteil (3) montiert sind.

4. Sattelanhänger (1) nach einem der vorstehenden Ansprüche, wobei die obere Rollenbaugruppe (12) an einer oberen Fläche (25) des Rahmens (10) und die untere Rollenbaugruppe (13) an einer unteren Fläche (26) des Rahmens (10) angreift.

5. Sattelanhänger (1) nach einem der vorstehenden Ansprüche, wobei Verriegelungsmittel (30, 31) zum lösbaren Verriegeln des Verlängerungsrahmens (10) in der Lagerposition oder in der ausgefahrenen Position bereitgestellt sind.

6. Sattelanhänger (1) nach Anspruch 5, wobei das Verriegelungsmittel komplementäre, ineinander greifende männliche (30) und weibliche (31) Formationen am hinteren Anhängerteil (3) und am Verlängerungsrahmen (10) umfasst.

7. Sattelanhänger (1) nach Anspruch 6, wobei die männlichen Formationen ein Paar voneinander beabstandeter Verriegelungsnocken (30) am hinteren Anhängerteil (3) umfassen, die weiblichen Formationen zwei in Längsrichtung voneinander beabstandete Paare von Empfängern (31) am Verlängerungsrahmen (10) umfassen.

8. Sattelanhänger (1) nach Anspruch 6, wobei das Verriegelungsmittel ein Paar von stößelbetätigten Verriegelungsbolzen (71, 72) umfasst, die parallel am hinteren Anhängerteil (3) montiert sind, um sich zwischen einer eingefahrenen, gelösten Position und einer ausgefahrenen, eingerückten Position zu bewegen, um mit komplementären, aufrechten Empfängern (31) am Verlängerungsrahmen (10) in Eingriff zu kommen.

9. Sattelanhänger (1) nach einem der vorstehenden Ansprüche, wobei die Polsterbaugruppe (5f) am Verlängerungsrahmen (10) ein Paar voneinander beabstandete verstellbare Polster (32, 33) umfasst, die am Verlängerungsrahmen (10) montiert sind, wobei jedes verstellbare Polster (32, 33) zwischen einer angehobenen Betriebsposition am Verlängerungsrahmen (10) und einer abgesenkten Lagerposition am Verlängerungsrahmen (10) beweglich ist.

10. Sattelanhänger (1) nach Anspruch 9, wobei die verstellbaren Verriegelungen (32, 33) an einem Querträger (23) an einem äußeren Ende des Verlängerungsrahmens (10) montiert sind und der Querträger (23) in einen komplementären Empfängerschlitz (35) am Anhängerchassis (3) einrastbar ist, wenn sich der Verlängerungsrahmen (10) in der zurückgezogenen Lagerposition auf dem Anhängerchassis (3) befindet.

11. Sattelanhänger (1) nach einem der vorstehenden Ansprüche, wobei die Polsterbaugruppe (5d) auf dem Anhängerchassis (2) zum Zusammenwirken mit der Polsterbaugruppe (5f) auf dem Verlängerungsrahmen (10) ein Paar klappbare Polster (45, 46) umfasst, die schwenkbar auf dem Anhängerchassis (2) montiert sind, um sich zwischen einer abgesenkten Lagerposition auf dem Anhängerchassis (2) und einer angehobenen Betriebsposition auf dem Anhängerchassis (2) zu bewegen.

12. Sattelanhänger (1) nach Anspruch 11, wobei das Anhängerchassis (2) ein Paar voneinander beabstandete parallele Längsträger (40, 41) aufweist und jedes Klapppolster (45, 46) in der Lagerposition an oder unterhalb einer oberen Oberfläche (48) der Längsträger (40, 41) und zwischen den Längsträgern (40, 41) angeordnet ist und das Klapppolster (45, 46) sich in der betriebsmäßigen Position seitlich nach außen von einem Längsträger (40, 41) erstreckt.

13. Sattelanhänger (60) nach einem der vorstehenden Ansprüche, wobei der Verlängerungsrahmen (10) auf dem hinteren Anhängerteil (3) zwischen der eingefahrenen Lagerposition auf dem hinteren Anhängerteil (3), einer teilweise ausgefahrenen Position (A) auf dem hinteren Anhängerteil (3) und einer vollständig ausgefahrenen Position (B) auf dem hinteren Anhängerteil (3) verschiebbar ist.

14. Sattelanhänger (60) nach Anspruch 13, wobei ein vorderes Ende (62) des Anhängerchassis teleskopisch ausfahrbar ist, um eine Drehverriegelungsbaugruppe darauf zu positionieren, die mit einer hinteren Drehverriegelungsbaugruppe (52) am Verlängerungsrahmen (10) zusammenwirkt, wenn sich der Verlängerungsrahmen (10) in der vollständig ausgefahrenen Position befindet, um einen Fünfundvierzig-Fuß-Container auf dem Sattelanhänger (60) zu montieren.

## Revendications

1. Semi-remorque (1), incluant :
un châssis de remorque (2, 3) monté sur des roues (7) et comportant un pivot d'attelage (4) destiné à être fixé sur un véhicule tracteur pour remorquer le châssis de remorque ;
le châssis de remorque (2, 3) comprenant un châssis de remorque télescopique extensible (2, 3) comprenant deux parties de remorque (2, 3) interconnectées de manière coulissante, à savoir une partie de remorque avant (2) et une partie de remorque arrière (3) ;
au moins deux ensembles de traverses (5) espacés longitudinalement sur le châssis de remorque (2, 3) permettant de monter une boîte à conteneurs sur le châssis de remorque (2, 3) pour le transport ;
**caractérisée en ce qu'un** cadre d'extension (10) est monté de manière coulissante sur la partie de remorque arrière (3), à une extrémité arrière de la partie de remorque arrière (3), pour se déplacer entre une position rétractée rangée sur la partie de remorque arrière (3) et une position étendue sur la partie de remorque arrière (3), augmentant ainsi la longueur de la semi-remorque ;
un ensemble traverse (5f) monté sur le cadre d'extension (10) pour coopérer avec l'un des ensembles traverses (5) sur le châssis de remorque (2, 3) pour monter une boîte à conteneurs sur le châssis de remorque (2, 3);
le cadre d'extension (10) venant en prise de manière coulissante avec le châssis de remorque (3) au moyen d'une paire d'ensembles de rouleaux espacés longitudinalement (12, 13) en prise entre la partie de remorque arrière (3) et le cadre d'extension (10) ;
les ensembles rouleaux (12, 13) comprenant un ensemble rouleau supérieur (12) en prise entre un sommet du cadre d'extension (10) et la partie de remorque arrière (3) et un ensemble rouleau inférieur (13) en prise entre un fond du cadre d'extension (10) et la partie de remorque arrière (3).

2. Semi-remorque (1) selon la revendication 1, dans laquelle l'ensemble rouleau de supérieur (12) est monté à l'intérieur de l'ensemble de_rouleau inférieur (13)

3. Semi-remorque (1) selon la revendication 1 ou la revendication 2, dans laquelle les deux ensembles rouleaux (12, 13) sont montés sur la partie de remorque arrière (3).

4. Semi-remorque (1) selon l'une quelconque des revendications précédentes, dans laquelle l'ensemble rouleau supérieur (12) vient en prise avec une face supérieure (25) du cadre d'extension (10) et l'ensemble rouleau inférieur (13) vient en prise avec une face inférieure (26) du cadre d'extension (10).

5. Semi-remorque (1) selon l'une quelconque des revendications précédentes, dans laquelle des moyens de verrouillage (30, 31) sont prévus pour verrouiller de manière amovible le cadre d'extension (10) dans la position rangée, ou dans la position étendue.

6. Semi-remorque (1) selon la revendication 5, dans laquelle les moyens de verrouillage comprennent des formations mâles (30) et femelles (31) complémentaires emboîtables sur la partie de remorque arrière (3) et sur le cadre d'extension (10).

7. Semi-remorque (1) selon la revendication 6, dans laquelle les formations mâles comprennent une paire de bossages de verrouillage (30) espacés sur la partie de remorque arrière (3), les formations femelles comprennent deux paires de récepteurs (31) espacées longitudinalement sur le cadre d'extension (10).

8. Semi-remorque (1) selon la revendication 6, dans laquelle les_moyens de verrouillage comprennent une paire de boulons de verrouillage actionnés par vérin (71, 72) montés en parallèle sur la partie de remorque arrière (3) pour un mouvement entre une position rétractée relâchée et une position déployée en prise étendue pour une mise en prise avec des récepteurs verticaux complémentaires (31) sur le cadre d'extension (10).

9. Semi-remorque (1) selon l'une quelconque des revendications précédentes, dans laquelle l'ensemble traverse (5f) sur le cadre d'extension (10) comprend une paire de traverses réglables à distance (32, 33) montés sur le cadre d'extension (10), chaque traverse réglable (32, 33) étant mobile entre une position d'utilisation relevée sur le cadre d'extension (10) et une position rangée abaissée sur le cadre d'extension (10).

10. Semi-remorque (1) selon la revendication 9, dans laquelle les traverses réglables (32, 33) sont montées sur une entretoise (23) au niveau d'une extrémité externe du cadre d'extension (10) et l'entretoise (23) peut être mise en prise de manière amovible à l'intérieur d'une fente réceptrice (35) complémentaire sur le châssis de remorque (3) lorsque le cadre d'extension (10) est dans la position rangée rétractée sur le châssis de remorque (3).

11. Semi-remorque (1) selon l'une quelconque des revendications précédentes, dans laquelle l'ensemble de traverses (5d) sur le châssis de remorque (2) destiné à coopérer avec l'ensemble de traverses (5f) sur le cadre d'extension (10) comprend une paire de traverses pliantes (45, 46) montées de manière pivotante sur le châssis de la remorque (2) pour se déplacer entre une position de rangée abaissée sur le châssis de remorque (2) et une position fonctionnelle relevée sur le châssis de remorque (2).

12. Semi-remorque (1) selon la revendication 11, dans laquelle le châssis de remorque (2) a une paire de poutres longitudinales parallèles espacées (40, 41) et chaque traverse pliante (45, 46) est située au niveau ou en dessous d'une surface supérieure (48) des poutres longitudinales (40, 41) et entre les poutres longitudinales (40, 41) dans la position rangée et la traverse pliante (45, 46) s'étend latéralement vers l'extérieur d'une poutre longitudinale (40, 41) lorsqu'elle est dans la position fonctionnelle.

13. Semi-remorque (60) selon l'une quelconque des revendications précédentes, dans laquelle le cadre d'extension (10) peut être déplacé de manière coulissante sur la partie de remorque arrière (3) entre la position rangée rétractée sur la partie de remorque arrière (3), une position partiellement étendue (A) sur la partie de remorque arrière (3) et une position complètement étendue (B) sur la partie de remorque arrière (3),

14. Semi-remorque (60) selon la revendication 13, dans laquelle une extrémité avant (62) du châssis de remorque est extensible de manière télescopique pour positionner un assemblage à verrou tournant sur celui-ci afin de coopérer avec un assemblage à verrou tournant arrière (52) sur le cadre d'extension (10) lorsque le cadre d'extension (10) est dans la position complètement étendue pour monter un conteneur de quarante-cinq pieds sur la semi-remorque (60).
